(19) Europäisches Patentamt
European Patent Office
Office européen des brevets

(11) EP 1 551 647 B1

(12) EUROPEAN PATENT SPECIFICATION

(45) Date of publication and mention
of the grant of the patent:
**21.04.2010 Bulletin 2010/16**

(51) Int Cl.:
**B60B 21/02** *(2006.01)* **B60B 21/10** *(2006.01)*
**B60C 3/06** *(2006.01)*

(21) Application number: **03774532.0**

(22) Date of filing: **02.10.2003**

(86) International application number:
**PCT/US2003/031325**

(87) International publication number:
**WO 2004/033230 (22.04.2004 Gazette 2004/17)**

(54) **WHEEL RIM WITH EXTENDED OUTER FLANGE**

RADFELGE MIT VERBREITERTEM, ÄUSSEREN FELGENHORN

ROUE MUNIE D'UN FLASQUE EXTERIEUR DEBORDANT ET PNEU CORRESPONDANT

(84) Designated Contracting States:
**AT BE BG CH CY CZ DE DK EE ES FI FR GB GR HU IE IT LI LU MC NL PT RO SE SI SK TR**

(30) Priority: **07.10.2002 US 266040**
**07.10.2002 US 266050**
**06.02.2003 US 361707**
**24.02.2003 US 372596**

(43) Date of publication of application:
**13.07.2005 Bulletin 2005/28**

(73) Proprietor: **Tezzen Wheel Corporation**
**Corona, CA 92880 (US)**

(72) Inventors:
• **HODGES, Frank, J.**
**Yorba Linda,**
**CA 92887 (US)**
• **ANCA, Sergiu**
**Garden Grove,**
**CA 92640 (US)**

(74) Representative: **Lloyd, Patrick Alexander Desmond**
**Reddie & Grose**
**16 Theobalds Road**
**London**
**WC1X 8PL (GB)**

(56) References cited:
**EP-A- 0 587 053     EP-A- 0 820 884**
**US-A- 2 209 967     US-A- 2 963 326**
**US-B1- 6 257 675**

• **PATENT ABSTRACTS OF JAPAN vol. 1996, no. 01, 31 January 1996 (1996-01-31) & JP 07 232507 A (KIYARA KK), 5 September 1995 (1995-09-05)**

## Description

### Related Application

This application is a continuation-in-part of U.S. Patent Application Serial No. 10/266,040, filed on October 7, 2002.

### Background of the Invention

### Field of the Invention

This invention relates generally to tires and wheels for vehicles and in particular to tires and wheels for creating the appearance of low-profile tires mounted on large-diameter wheels.

### Description of the Related Art

In recent years, consumer demand for large-diameter vehicle wheels mounted within low-profile tires has increased dramatically. Such wheels and tires create a stylish look for the vehicle on which they are used, but they cost much more than standard-sized wheels and tires. As a consequence, large-diameter wheels and low profile tires are desired by many consumers, but are beyond the financial reach of a large segment of the market. Moreover, most companies that make wheels are set up for mass production of wheels of certain standard sizes, and have often lagged behind consumer demand in developing or re-tooling expensive equipment, including molds and casting machinery, to produce the largest wheels desired by consumers.

In addition, as wheels become larger and the corresponding tires become smaller, the ride performance of the wheel-tire combination often suffers. For example, a smaller tire surrounding a larger wheel provides less air volume to support the vehicle. The proper amount of air volume allows the vehicle to absorb substantial vibration and other vertical and/or horizontal motion in the wheels. When the air volume is reduced, the vehicle may not ride as smoothly and the weigh-load rating may be more limited. By limiting the weigh-load rating, the market for certain types of vehicles (such as trucks or SUVs) may be significantly decreased. Thus, it would be advantageous to provide the appearance of thinner tire and larger wheel while providing a smoother ride, higher weight-load rating, and more tire between the wheel and the road.

Some consumers who want the look of large-diameter wheels, but who cannot afford them or are concerned with diminished ride performance, may be willing to pay an intermediate cost to make standard-sized wheels and tires take on the appearance of the more expensive (and possibly unavailable) products. Detachable wheel extensions, such as the one shown in U.S. Patent Publication No. US 2002/0079735 A1 have been used to attempt to simulate the appearance of larger wheels mounted within low-profile tires.

However, such extensions mask a portion of the front face of the wheel and do not provide a surface integral with the design on the face of the wheel. Thus, the attempted simulation does not have a realistic appearance.

In particular, some wheel extensions of the prior art have an inner ring that is removably secured within an inside edge of the outer lip of the existing wheel using a compression fit (as with a standard hub cap). A wide outer flange is attached to the inner ring and extends radially outwardly across a portion of the outside tire wall. The wheel extensions are intended to be used with many different types of wheels having a variety of surface designs on their front faces. The outward surfaces of the inner ring and outer flange generally have a smooth, generic appearance to attempt to aesthetically interface with all of these different designs. Although outer flanges of the prior art may include a narrow, upturned lip formed along the outer diameter of the flange and/or an undulated outward surface (e.g., a smooth stair-step pattern of concentric rings), the flanges do not include protrusions, indentations, or slits on their surfaces as are commonly found on the central portion of the front face of many wheels.

The inner ring for securing the wheel extension to the wheel is generally at least about 1/2 inch (1.3cm) thick around its circumference, which covers up a significant portion of the underlying wheel face. When mounted on a wheel with a 17-inch (43cm) diameter, a 1/2-inch (1.3cm) thick ring makes the wheel appear to be only 16-inches (41cm) in diameter. This results in a reduction of the visible surface area of the wheel by well over 10 percent. In addition, the smooth outward surfaces of the inner ring and outer flange generally do not blend in well with the existing design of the wheel. Indeed, the wheel extensions of the prior art are usually easily detectable by even a casual observer, and merely give the appearance of an over-extended add-on lip covering a portion of the outer tire wall. Thus, the attempted simulation is not only ineffective, it actually creates the opposite effect. Rather than simulating a larger wheel mounted within a low profile tire, the wheel extension gives the appearance of a smaller wheel mounted on a standard tire.

European patent application no. EP-A-0587053 discloses a vehicle wheel having an outer flange that extends over a portion of the wheel's tyre and spokes that extend from a central portion of the wheel to an outer portion of the wheel's barrel.

German patent no. DE-A-10030314 discloses a wheel having a standard sized inboard and outboard lips for engaging the beads of a tyre and a spoke design pattern that extends onto part of the standard sized outboard lip.

### Summary of the Invention

The present invention provides an improved wheel and tire for simulating the appearance of a larger-diameter wheel mounted within a low-profile tire. The wheel has an inboard side and an outboard side. The outboard side includes a wide outer flange which extends around the outer circumference of the wheel.

The outer flange is preferably integral with the outboard face of the wheel and covers a substantial portion of the outer wall of the tire within which the wheel is mounted. The outer flange of the wheel may also be detachable from the remainder of the wheel. The inboard side may also include a wide inboard flange that is preferably detachable. A design, preferably comprised of, for example, a plurality of protrusions, indentations, and slits, extends across at least a portion of the outboard face of the wheel, including the outboard face of the extended outer flange.

The wheel of the present invention may be mounted within the tire of the present invention to produce a highly effective simulation of a larger-diameter wheel mounted with a low-profile tire, without sacrificing wheel and/or tire ride performance.

## Brief Description of the Drawings

**Figure 1** is an outboard perspective of a wheel as in the prior art.

**Figure 2** is a side view of the wheel of **FIGURE 1.**

**FIGURE 3** is an outboard front view of a tire to be mounted on the wheel of **FIGURE 1** as in the prior art.

**FIGURE 4** is an outboard front view of the wheel of **FIGURE 1** with the tire of **FIGURE 3** mounted thereon.

**FIGURE 5** is a side view of the wheel and tire of **FIGURE 4.**

**FIGURE 6** is an outboard perspective view of an embodiment of a wheel of the present invention.

**FIGURE 7** is a side view of the wheel of **FIGURE 6.**

**FIGURE 7A** is a side view of another embodiment of a wheel of the present invention.

**FIGURE 7B** is a side view of another embodiment of a wheel of the present invention.

**FIGURE 7C** is a side view of another embodiment of a wheel of the present invention.

**FIGURE 7D** is a side view of another embodiment of a wheel of the present invention.

**FIGURE 8** is an outboard front view of the wheel of **FIGURE 6** with the tire of **FIGURE 3** mounted thereon.

**FIGURE 8A** is an outboard front view of the wheel of **FIGURE 7A** or **FIGURE 7C** with the tire of **FIGURE 3** mounted thereon.

**FIGURE 8B** is an outboard front view of the wheel of **FIGURE 7B** with the tire of **FIGURE 3** mounted thereon.

**FIGURE 9** is a side view of the wheel and tire of **FIGURE 8.**

**FIGURE 10** is an outboard front view of an embodiment of a tire of the present invention.

**FIGURE 11** is a side view of a wheel of the present invention with the tire of **FIGURE 10** mounted thereon.

**FIGURE 11A** is a side view of a wheel of the present invention with another embodiment of the tire of the present invention mounted thereon.

**FIGURE 11B** is a side view of another embodiment of a wheel of the present invention with the tire of **FIGURE 11A** mounted thereon.

**FIGURE 12** is a side view of another embodiment of a wheel of the present invention with the tire of **FIGURE 10** mounted thereon.

**FIGURE 13** is a side view of another embodiment of a wheel of the present invention with the tire of **FIGURE 10** mounted thereon.

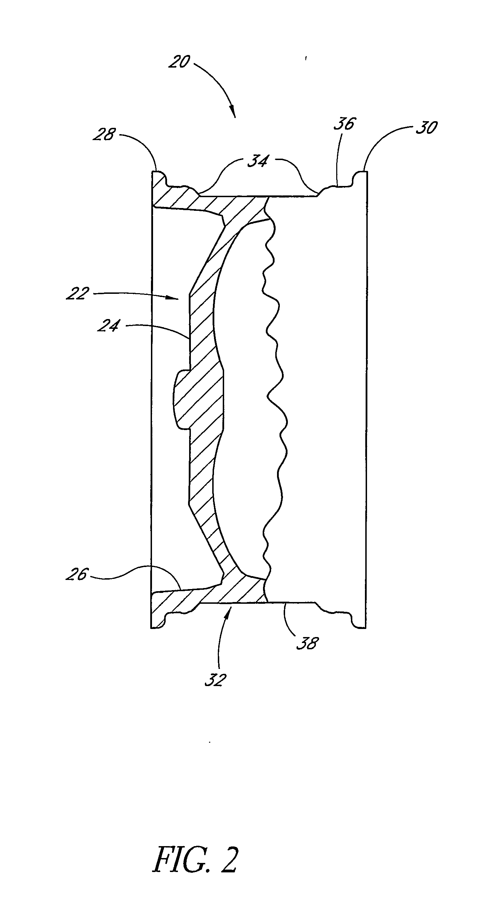

In **FIGURES 2, 5, 7, 9**, and **11**, a portion of the wheels is shown cut away to illustrate the interior space.

## Detailed Description of the Preferred Embodiment

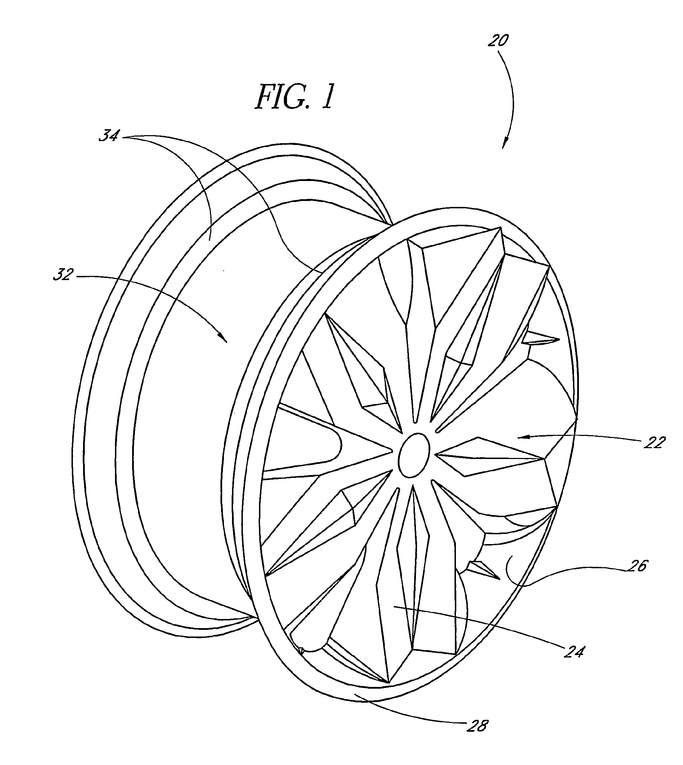

When mounted on a vehicle, a wheel has an "inboard" side that faces the interior of the vehicle and an "outboard" side that faces away from the vehicle. **FIGURE 1** shows an outboard perspective view of a wheel **20** as in the prior art. The wheel **20** has a central hub **22** with an outboard face **24.** The wheel **20** also has a sidewall 26 that extends horizontally away (i.e., in the outboard direction) from the central hub **22,** and an outboard lip 28 that extends radially outwardly from the outer edge of the sidewall **26.** As used herein, the term "radially outwardly" refers to substantially circular or cylindrical surfaces that extend from an inner point, line, or circle to an outer circle.

Referring to **FIGURE 2,** on the inboard side of the wheel **20** is an inboard lip 30 that is similar in shape and size to the outboard lip **28.** In a typical wheel of the prior art, each lip **28, 30** is about 3/4 inch (1.9cm) long from the base of the lip to the peak of the lip, and about 1/4 inch (0.6cm) in thickness from the outboard side of the lip to the inboard side of the lip.

The portion of the wheel **20** extending between the inboard lip **30** and the outboard lip **28** is known as the wheel barrel **32.** The barrel **32** is substantially cylindrical in shape and its central axis lies on the center of the face **24** of the wheel **20.** In a typical 17-inch (43cm) wheel, the distance along the wall **38** of the barrel **32** between the inboard lip **30** and the outboard lip **28** is about 8 inches (20.3cm). The barrel **32** must be sufficiently rigid to resist the substantial forces that act upon the wheel **20,** especially during extreme acceleration, braking, and turning. As a result, the majority of the mass of the wheel **20** is generally located in the barrel **32,** and the majority of the cost of the alloy metal used to make the wheel is spent on the material for the barrel **32.**

There is a significant difference in barrel **32** masses among wheels of different sizes. An approximation for the volume of the alloy metal required to make the barrel **32** is calculated as follows:

$$0.25 \, \pi \, t \left( d_{out}^{\,2} - d_{in}^{\,2} \right)$$

where **t** is the barrel depth or distance between the inboard and outboard lips **30, 28;** $d_{in}$ is the inner diameter of the barrel **32;** and $d_{out}$ is the outer diameter of the barrel **32.** The foregoing formula approximates the volume of the barrel **32** by presuming that the wall of the barrel **32** has a uniform diameter across its entire surface, even though it varies somewhat (due primarily to the sloping portions **34),** but the calculation is sufficiently close for purposes of this description.

The thickness of the wall of the barrel **32** is typically about 5/16 inch (0.8cm).
As an example, a 17-inch (43cm) wheel has an inner barrel diameter **($d_{in}$)** of about 17 inches (43 cm), an outer barrel diameter **($d_{out}$)** of about 17 5/8 inches (45cm) (i.e., the inner diameter plus the wall thickness on both sides), and a barrel depth **(t)** of about 8 inches (20cm). Using the foregoing equation, the resulting volume of the alloy metal for a 17-inch (43cm) wheel is calculated to be about 136 cubic inches (2200cm$^3$). In contrast, a 22-inch (56cm) wheel has an inner barrel diameter of about 22 inches (56cm), an outer barrel diameter of about 22 5/8 inches (57cm), and a barrel depth of about 10 inches (25cm). The resulting volume of the alloy metal is therefore about 220 cubic inches (3600cm$^3$).
Thus, a 22-inch (56cm) wheel requires over 60% more alloy metal for the wall of the wheel barrel **32** than a 17-inch (43cm) wheel, even though the inner barrel diameter is less than about 30% larger in a 22-inch (56cm) wheel than a 17-inch (43cm) wheel. This difference in material requirements is the primary reason why large-diameter wheels are much more expensive to manufacture than standard-sized wheels.

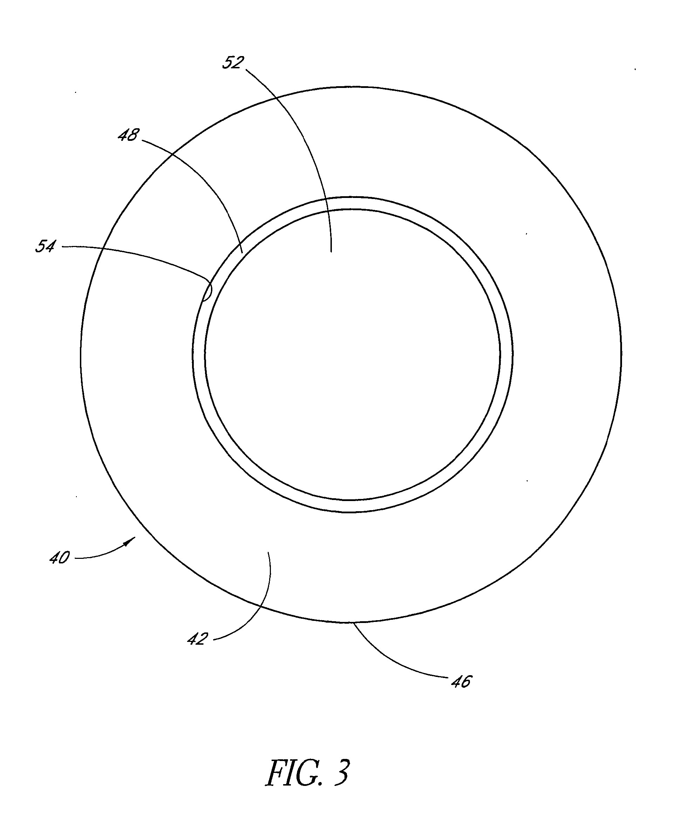

Referring to **FIGURES 3-5,** the tire **40** includes an outboard tire wall **42,** an inboard tire wall **44,** a tread **46,** an outboard bead **48,** an inboard bead **50,** and a wheel void **52.** The tire beads **48, 50** are essentially indented rings formed on the inner radial edges of the respective inboard and outboard tire walls **42, 44.** The wheel **20** is mounted within the wheel void **52** of the tire **40.**

During the tire mounting process, the outboard bead **48** of the tire 40 is forced behind the outboard lip **28** of the wheel **20,** and the inboard bead **50** is forced behind the inboard lip **30.** The width of the beads **48, 50** is intended to generally correspond to the height of the lips **28, 30.** When a mounted tire is filled with air, the interior air pressure forces the beads **48, 50** firmly against the interior sides of the lips **28, 30,** forming an air-tight seal. Because the lips **28, 30** and beads **48, 50** have generally corresponding sizes, the tire walls **42, 44** usually do not, under normal conditions and stationary loads, need to contort or stretch to pass around the lips **28, 30.**

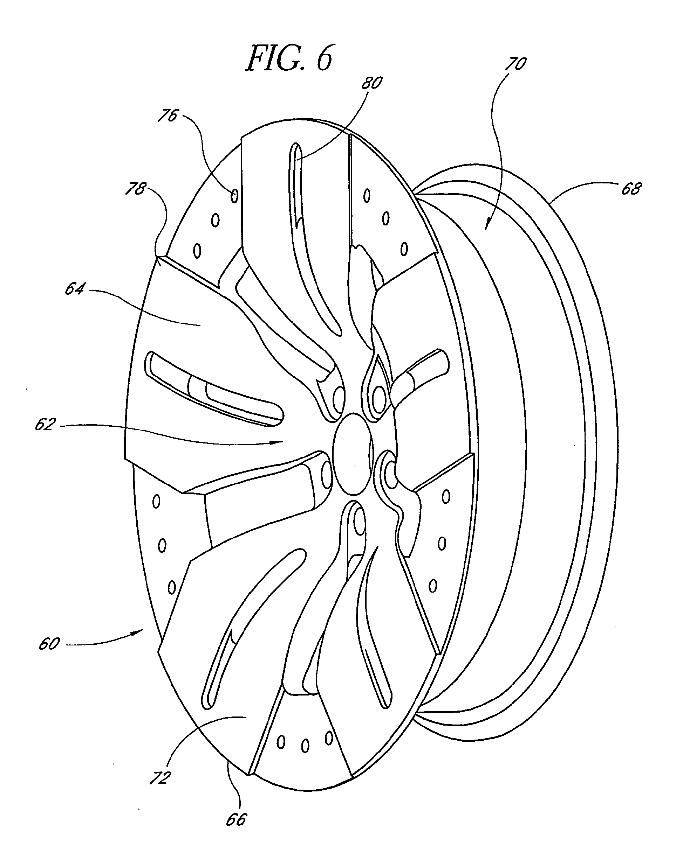

**FIGURE 6** is an outboard perspective view of an embodiment of a wheel 60 of the present invention.

The wheel **60** has an outboard face **64** and an inboard face (not shown). The outboard face **64** is comprised of two concentric regions: a central hub **62** and an extended outer flange **66.** As used herein, terms relating to circles and cylinders, such as "circular," "cylindrical," "diameter," "radius," and "concentric," are not intended to be limited to perfectly round structures. Rather, generally circular shapes, including those with large radial protrusions or indentations are encompassed by these terms.

The central hub **62** and the outer flange **66** may be integral with each other. The structural integrity may reduce the risk that the component parts become damaged and separated, and it may provide a greater degree of continuity in appearance between the structures. The central hub **62** and the outer flange **66** are still considered to be integral with each other if additional structures (such as, for example, a lug nut cover) are attached to all or a portion of the central hub **62.**

The region between the outboard face **64** and the inboard face is the wheel barrel **70.** The wheel barrel **70** is approximately cylindrical in shape and its central axis lies approximately on the center of the face **64** of the wheel **60.** An inboard lip **68** extends radially outwardly along the outer edge of the inboard face.

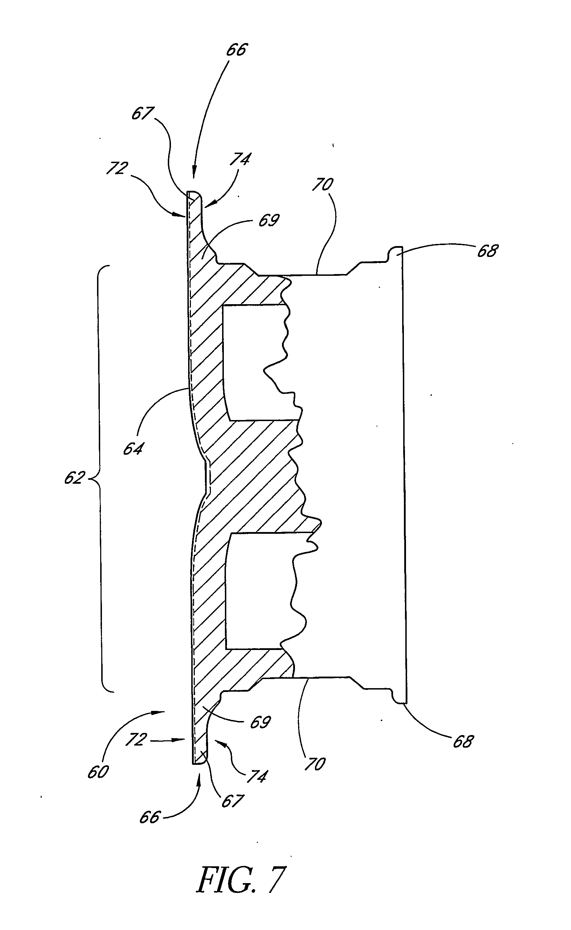

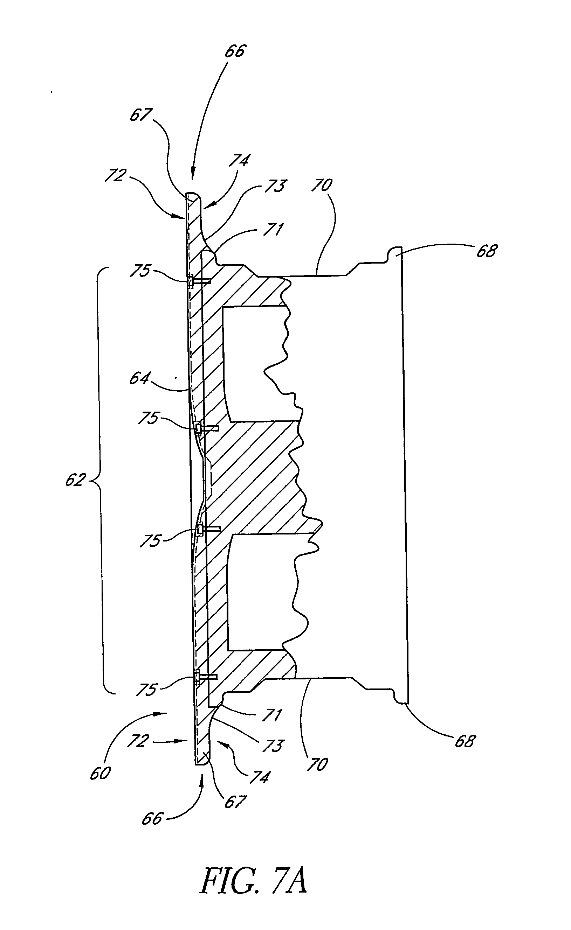

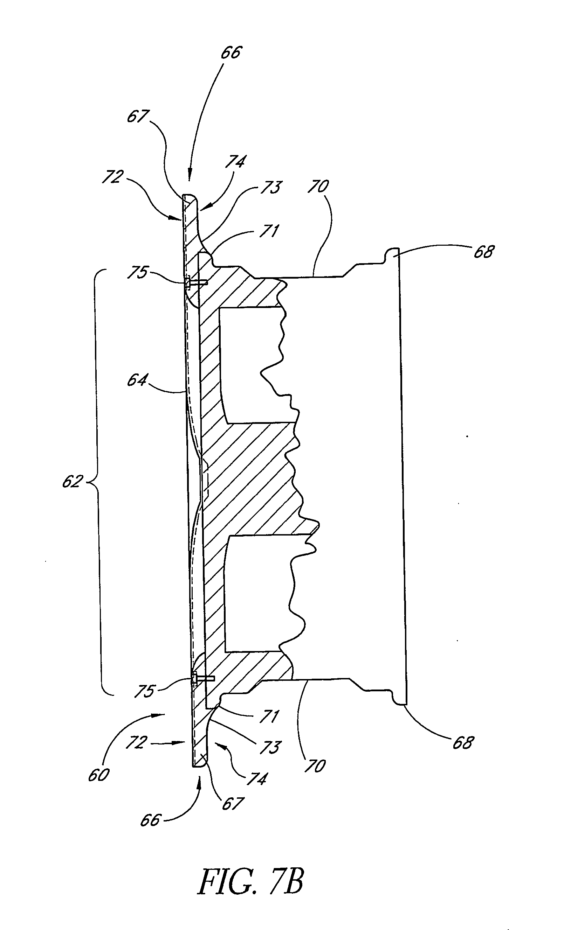

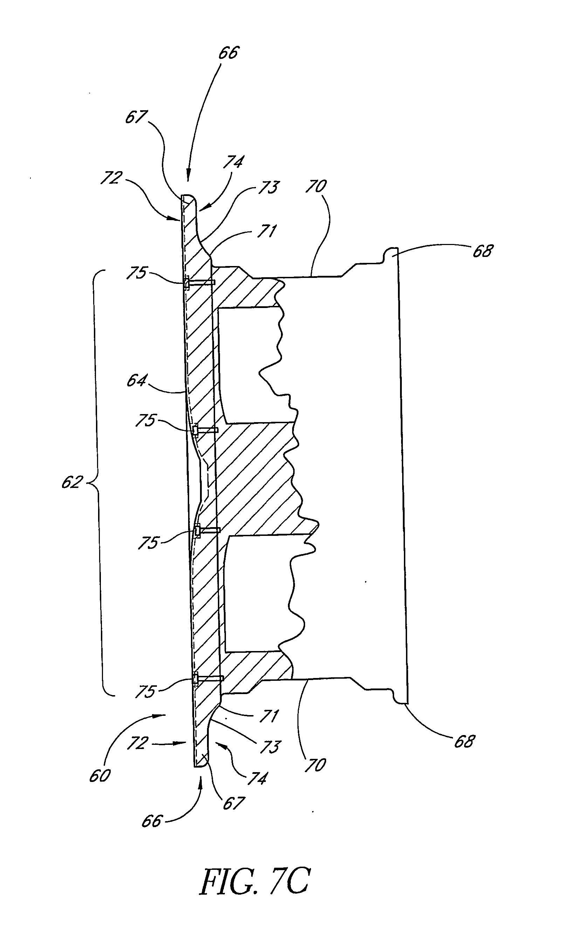

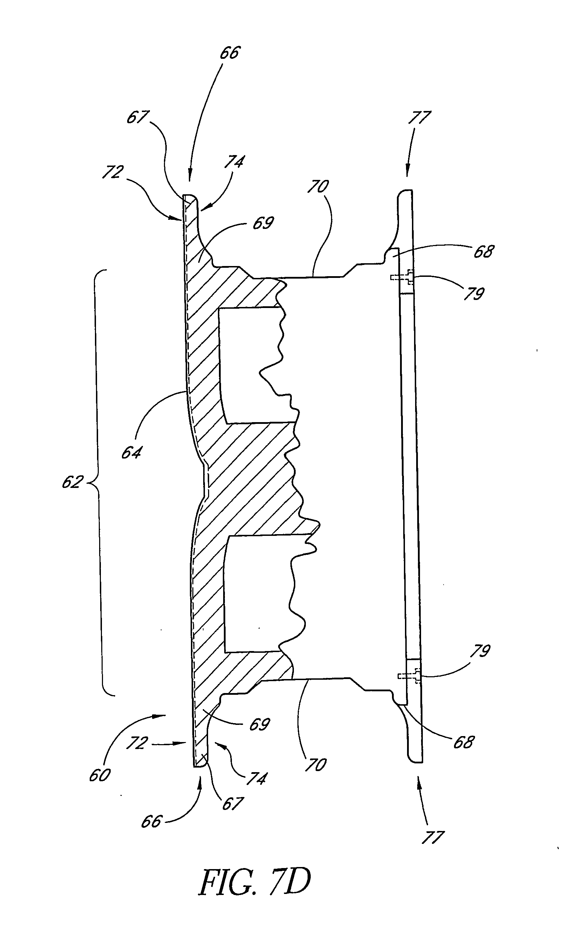

The central hub **62** extends radially from the center of the outboard face **64** to approximately the same outer diameter as the wheel barrel **70** (which is attached to the inboard side of the outboard face **64).** The outer flange **66,** in turn, extends from the outer diameter of the central hub **62** to the full outer diameter of the wheel face **64.** The outer flange **66** has an outboard face **72** and an inboard face **74** (see **FIGURE 7).**
In the embodiment shown in **FIGURE 6,** the boundary between the central hub **62** and outer flange **66** is essentially seamless. The seamless boundary is preferred because it enhances the desired simulation of a larger-diameter wheel. However, wheels with readily discernible boundaries between the central hub **62** and outer flange **66** may still provide the desired appearance and are encompassed by the present invention.

In the illustrated example, the diameter of the central hub **62** is approximately 17 inches (43cm), and the radial width across the flange face **72** is approximately 2-1/2 inches (6.3cm). Thus, the diameter of the outboard face **64** of the wheel **60** is approximately **22** inches (56cm). Numerous other possible size combinations will be apparent to those of skill in the art after reading this disclosure. For example, central hubs **62** having diameters between 13 inches (33cm) and 22 inches (56cm) could be combined with outer flanges **66** with widths of 1 inch (2.5cm), 1 1/2 inch (3.8cm), 2 inches (5.1cm), 2 1/2 inches (6.3cm), 3 inches (7.6cm), 3 1/2 inches (8.9cm), or 4 inches (10.2cm) to produce overall wheel faces **64** of between 15 inches (38cm) and 30 inches (76cm). Many other sizes within and beyond these ranges and examples are encompassed by the present invention.

As shown in **FIGURE 6,** the wheel **60** includes an integral aesthetic design on its outboard face **62**. The design preferably extends from the central hub **62** into and across at least a portion of the outer flange **66**. The design on the front face **72** of the outer flange **66** preferably includes a pattern of surface variations comprising a plurality of at least one of either indentations **76**, protrusions **78**, or slits **80** that are aesthetically consistent with and blend into the design of the central hub **62**. As used herein, the term "slits" encompasses grooves formed on a surface whether or not such grooves pass through the surface. In the illustrated embodiment, the integral design creates the appearance that the spokes formed on the central hub **62** extend into the outer flange **66**, making it more difficult to perceive upon casual inspection where the central hub **62** ends and the outer flange **66** begins. Indeed, the consistency and blending of the designs on the central hub **62** and outer flange **66** make it unlikely that the casual observer of a mounted wheel **60** would notice that the outer flange **66** extends beyond the wheel barrel **70**.

In the illustrated example, the outer flange **66** has an upper portion **67** and a lower portion **69**. The thickness of the upper portion **67** of the outer flange **66** is about 1/4 inch (0.64cm), although the indentations and protrusions on the outboard surface of the outer flange **66** may produce variations in the thickness of the outer flange **66** in certain regions across its face. The thickness of the upper portion **67** of the outer flange **66** is preferably between about 1/8 inch (0.32cm) to 1/4 inch (0.64cm), and the outboard and inboard surfaces of the upper portion **67** are preferably generally parallel. In the illustrated embodiment, the lower portion **69** of the outer flange **66** is thicker than the upper portion **67**. The inboard face of the lower portion **69** preferably has a curved upper edge and a straight lower edge. In the example shown, the thickness of the lower portion **69** ranges from about 1/4 inch (0.64cm) along its upper edge to about 1/2 inch (1.3cm) along its lower edge. The thickness of the outer flange **66** for a given wheel is determined by a variety of factors relating to aesthetics and structural integrity. Many other possible shapes and thicknesses for the outer flange **66** will be apparent to those of skill in the art after reading this disclosure and are encompassed by the present invention.

As shown in **FIGURE 7,** the radial extension of the inboard lip **68** is preferably less than the radial extension of the outer flange **66**. In the illustrated embodiment, the height of the inboard lip **68** is about 3/4 inch (1.9cm) long from its peak to its base (at the outer radius on the inboard side of the wheel barrel **70)**, and about 1/4 inch (0.64cm) in thickness from its outboard side to its inboard side. Thus, the inboard lip **68** is preferably comparable in size to the inboard and outboard lips **30**, 28 of typical prior art wheels. The height of the inboard lip is preferably between about 1/2 inch (1.3cm) and 3/4 inch (1.9cm). The inboard lip **68** is preferably smaller than the outer flange **66** to facilitate mounting a tire on the wheel **60** by permitting the leading edge of the tire to be slid over the smaller inboard side of the wheel **60** and then merely abutted against the interior side of the extended flange **66**. It would be more difficult to slide the leading edge of the tire over the extended outer flange **66** on the outboard side of the wheel **60**. Moreover, the smaller inboard lip **68** requires less alloy metal material than would an inboard lip comparable in size to the outer flange **66**. The inboard lip **68** may also be comparable in size and/or shape with the outer flange **66** so as to produce a more balanced wheel **60**.

Additional embodiments of the wheel of the present invention are shown in **FIGURES 7A-7D**. In the embodiment of **FIGURE 7A,** the outboard face **64** of the wheel **60** is removably attached to the remainder of the wheel **60**. The wheel **60** preferably includes an outboard lip **71** that is comparable in size and shape to the inboard lip **68**. The removable outboard face **64** includes an outer flange **66** that extends radially beyond the outer diameter of the outboard lip **71**. The inboard face **74** of the outer flange **66** preferably includes a notch **73** that extends in the inboard direction.

The notch **73** preferably abuts against the outboard lip **71,** and helps to properly align the outboard face **64** with the outboard lip **71** during installation (e.g., as a stock component or as an after-market product). The notch **73** also helps to bear the weight load of the vehicle between the tire and the wheel barrel **70,** especially upon decompression of the tire on which the wheel **60** is mounted. Without a notch **73** or an equivalent structure, the weight of the vehicle would be borne substantially by the bolts (described below) or other means which connect the outboard face **64** to the remainder of the wheel **60**.

The outboard face **64** of the embodiment shown in **FIGURE 7A,** like the outboard face **64** shown in **FIGURE 6,** preferably includes an integral aesthetic design that extends into and across at least a portion of the outer flange **66**. The design on the outboard face **64** of the outer flange **66** preferably includes a pattern of surface variations comprising a plurality of at least one of either indentations, protrusions, or slits that are aesthetically consistent with and blend into the design on the central hub **62** of the outboard face **64.**

The outboard face **64** is preferably attached to the remainder of the wheel **60** by bolts **75** passing through the outboard face and into the central and/or peripheral portions of the central hub **64**. Those of skill in the art will appreciate after reading this disclosure that alternative or additional means may also be used to attach the outboard face **64** to the central hub **62** and are encompassed by the present invention.

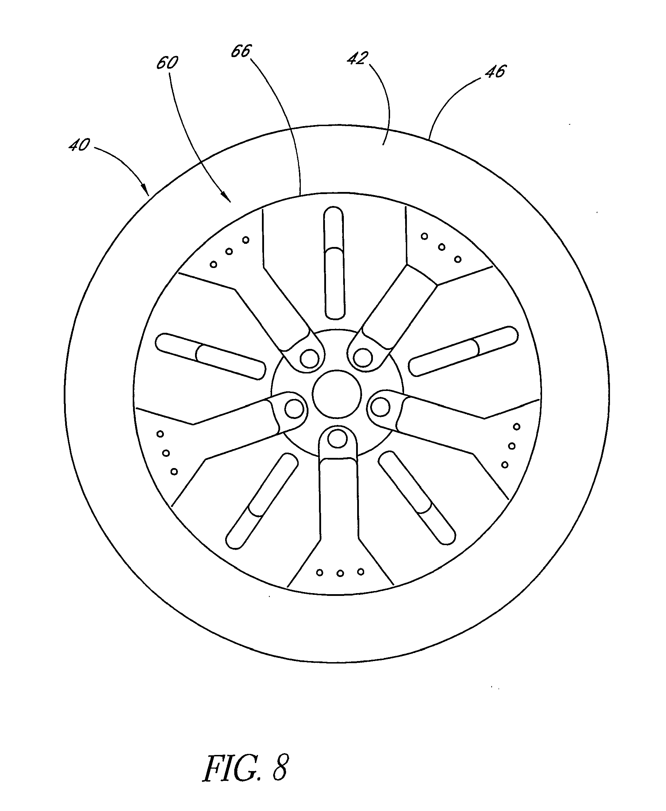

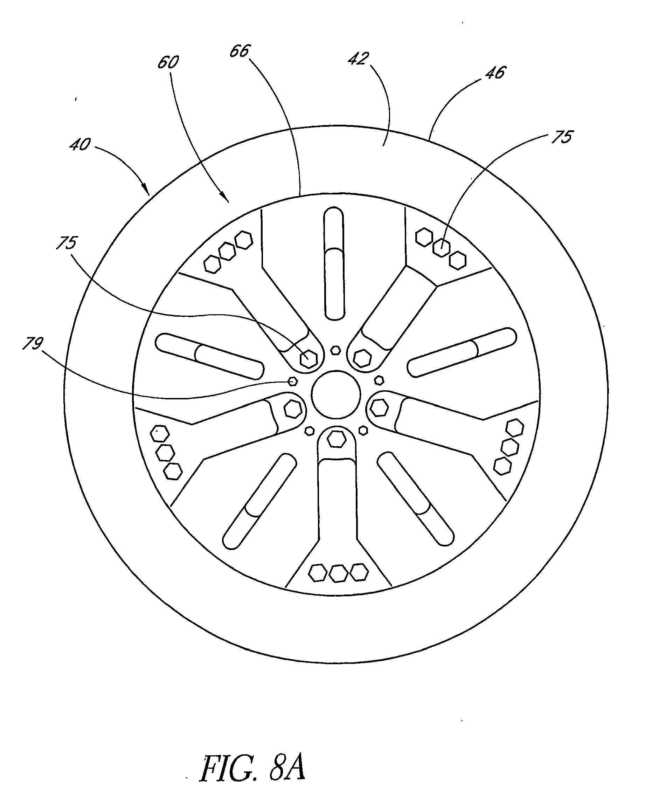

For example, the outboard face **64** could also be attached to the remainder of the wheel **60** using the lug studs and lug nuts (not shown) that attach the wheel **60** to the vehicle. In such an arrangement, the lug studs would preferably be longer than standard studs so that they would extend from the vehicle, through the central hub **62** of the wheel **60,** and through lug holes in the central portion of the outboard face **64.** The lug nuts would then be passed over the lug studs until the lug nuts abut securely against the outboard side of the outboard face **64.** Alternatively, a first set of lug nuts may be used to secure the underlying wheel **60** to the vehicle in the conventional manner, and then the outboard face **64** may be mounted against the wheel **60** with the extended portion of the lug bolts passing through corresponding holes in the central part of the outboard face **64.** A second set of lug nuts may then be used to secure the outboard face **64** to the wheel **60** by passing such nuts over the extended portions of the lug bolts and against the outboard face **64.** The outboard face **64** may also be secured to the wheel **60** by passing screws **79** through the central portion of the outboard face **64** and into the wheel **60** between the lug nuts (see **FIGURE 8A).** The means for connecting the outboard face **64** to the wheel **60,** whether in the form of bolts, lug nuts, screws, or some other equivalent connector, may be covered by additional structures such as plates or caps to achieve a desired aesthetic or functional effect.

The embodiment of **FIGURE 7A** generally provides the following advantages (depending upon the particular way it is implemented): (1) allowing a user to remove the outboard face **64** and replace it with an alternative outboard face with a different design (or a standard hubcap); (2) during tire installation, maintenance, and/or replacement, the extended flange **66** on the outboard face **64** is not an obstruction because the outboard face **64** can be quickly and easily removed; (3) if the outboard face **64** is damaged, it may generally be replaced at a lower cost than replacing the entire wheel **60;** and (4) the vehicle on which the wheel **60** is mounted may generally be used even when the outboard face 64 is removed. These advantages are not necessarily achieved in all embodiments of **FIGURE 7A** or in other embodiments of the present invention.

In the embodiment of **FIGURE 7B,** the outer flange **66** is removably attached to the remainder of the wheel 60. The outer flange **66** in this embodiment is preferably a ring with an inner diameter smaller than the outer diameter of the outboard lip **71** and with an outer diameter larger than the outer diameter of the inboard lip **71.** Accordingly, the outer flange, when aligned with the periphery of the central hub **64,** preferably overlaps a portion of the central hub **62** and extends radially outwardly beyond the outboard lip **71.**

Bolts **75** are preferably passed through the outer flange **66** in the region of overlap with the central hub **64** to thereby removably secure the outer flange **66** thereto.

Those of skill in the art will appreciate after reading this disclosure that other means for attaching the outer flange **66** to the central hub **62** may also be used and are encompassed by the present invention.

As in the embodiments of **FIGURES 7** and **7A,** the outboard face of the central hub **64** of **FIGURE 7B** includes an aesthetic design, and the outboard face **72** of the outer flange **66** also includes an aesthetic design. Preferably, the respective designs of the central hub **62** and outer flange **66** are consistent and blend with each other to create the impression that the outer flange **66** is a unitary part of the wheel **60.** The embodiment of **FIGURE 7B** preferably provides each of the advantages described in connection with the embodiment of **FIGURE 7A.** The foregoing advantages may be more pronounced in the embodiment of **FIGURE 7B** because it is generally more easily detachable and less expensive to manufacture.

The embodiment of **FIGURE 7C** is very similar to the embodiment of **FIGURE 7A,** but the outboard face **64** includes the outboard lip **71.** The bolts **75** are preferably longer in the illustrated embodiment (as compared with the embodiment of **FIGURE 7A)** so as to extend from the outboard face **64** a sufficient distance into the outboard portion of the wheel barrel **70.** By combining the outboard face **64** and the outboard lip **71** into a unitary structure, it is generally possible to more easily install or remove a tire on the wheel, especially when tire-installation equipment is not readily available. The tire bead would not need to be bent or stretched around the outboard lip **71** of the wheel **60** because the outboard lip **71** may be removed entirely before sliding the tire on the wheel **60.** Such an arrangement makes it more convenient to replace a punctured or blown-out tire on the road. Indeed, it would not even be necessary for vehicles to include a heavy spare tire-wheel combination. Instead, vehicles equipped with the embodiment of **FIGURE 7C** (and other embodiments shown herein) could merely carry an extra tire without the extra wheel.

Many vehicle emergency kits come standard with small portable compressors for filling up tires which could be used to fully inflate a spare tire mounted on a wheel with a detachable bead.

The embodiment of **FIGURE 7C** also preferably includes an aesthetic design on the outboard face of the central hub **64** and on the outer flange **66.** As with the other embodiments described herein, the respective designs on the central hub **64** and outer flange 66 are preferably consistent with and blend into each other.

In the embodiment of **FIGURE 7D,** the inboard side of the wheel includes a detachable inboard flange **77.** The inboard flange 77 is preferably connected to the inboard side of the wheel using bolts **79.** As previously explained, other attachments means may also be used. The inboard flange **77** makes the wheel **60** more balanced by including structures of approximately the same weight and radial position on the opposite side of the wheel **60** from the outboard flange **66.** The precise balancing of wheels and tires is often a challenge for those designing and maintaining vehicles because imbalances may potentially cause road noise or misalignment problems. Moreover, when a tire is punctured during travel or removed for maintenance or replacement, the vehicle may tip in the direction of the deflated tire and rest upon the outermost radial portions of the wheel on which the tire was mounted.

In the embodiment of **FIGURE 7D,** the load carried by the outboard flange 66 is effectively reduced by half because it is shared by the inboard flange **77.**

The width of the inboard flange **77** (i.e., the difference between its outer diameter and its inner diameter) in the illustrated embodiment is approximately 2 1/2 inches (6.4cm).

The width of the inboard flange **77** may be varied depending upon the intended usage of the wheel **60,** and such widths may include 1 inch (2.5cm), 1 1/2 inches (3.8cm), 2 inches (5.1cm), 2 1/2 inches (6.4cm), 3 inches (7.6cm), 3 1/2 inches (8.9cm), or 4 inches (10cm). Many other widths within and beyond these ranges and examples are encompassed by the present invention.

The inboard flange is preferably detachable, especially when used with a wheel having a unitary outer flange **66** and central hub **62** (as shown in **FIGURE 7D**) to facilitate removal, when necessary, of the tire from the wheel **60.** The inboard flange **77** may also be used on the embodiments shown in **FIGURES 7A** and **7B.** The inboard flange may also be integral with the inboard lip **28,** especially if used on the embodiments of **FIGURES 7A** and **7B,** wherein the tire may be removed by passing it over the outboard side of the wheel **60.** The inboard flange **77** may also be integral with a removable inboard wheel face plate which may include the inboard lip (e.g., a mirror image of the embodiments shown in **FIGURE 7A** and **7C**).

The inboard flange **77** preferably does not include a design on its face because it is not normally open to view when mounted on the vehicle, and a design would add unnecessary cost to the product. The inboard flange **77** could alternatively be produced with a design on its face to produce a more precise balance between the inboard and outboard sides of the wheel or for other considerations.

The various embodiments of the wheel **60** may be mounted within a typical prior art tire such as the tire **40** illustrated in **FIGURE 3.** During the tire mounting process, the outboard bead **48** of the tire **40** is positioned behind the outer flange **66,** and the inboard bead **50** is positioned behind the inboard lip **68.** When the mounted tire is filled with air, the interior air pressure forces the beads **48, 50** firmly against the interior sides of the outer flange 66 and the inboard lip **68.**

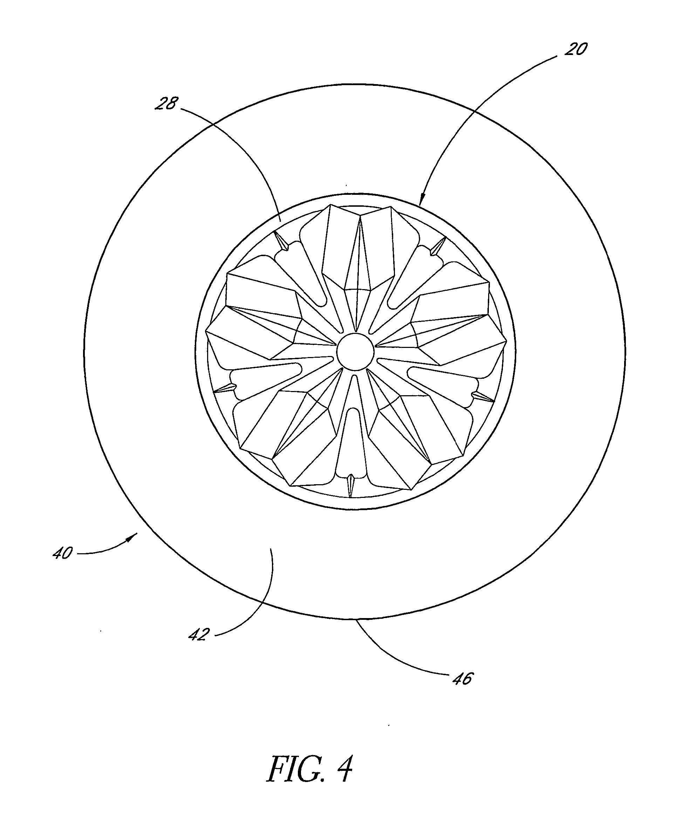

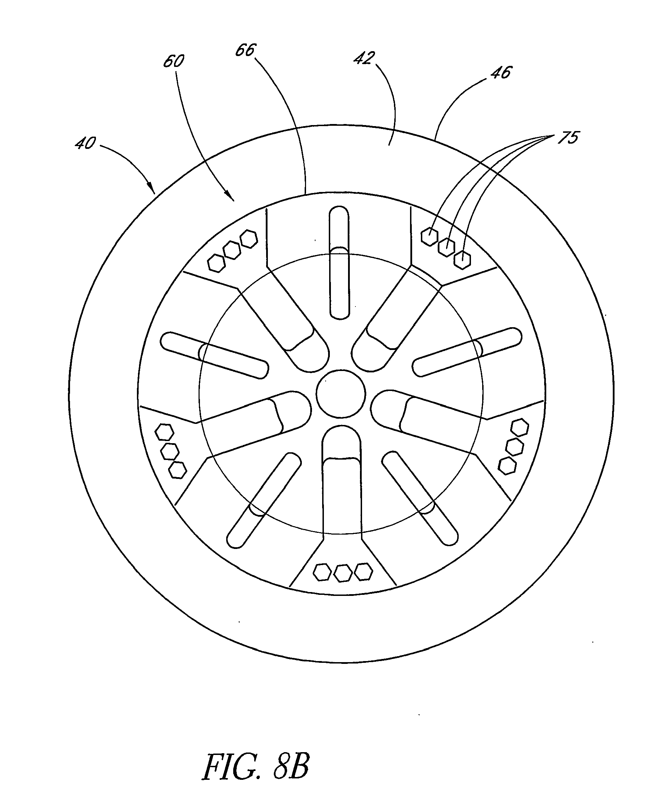

**FIGURE 8** illustrates background to the present invention. It is an outboard front view of the wheel **60** with a typical prior art tire 40 mounted thereon. Although the diameters of the barrels **32, 70** of the wheels **20, 60** shown in **FIGURES 4** and **8** are the same, and the tires **40** on which the wheels are mounted are the same, the mounted wheels **20, 60** have a remarkably different outward appearance. The wheel **60** of **FIGURE 8** gives the appearance of a significantly larger diameter wheel mounted on a low-profile tire. Upon casual inspection, it is unlikely that an observer would perceive that the barrel **70** of the wheel **60** actually has a much smaller diameter and that the outer flange **66** extends across a substantial portion of the outboard tire wall **42.** Indeed, the diameter of the wheel **60** may even be made to appear to be larger than any wheel readily available to consumers in the mass-production wheel market.

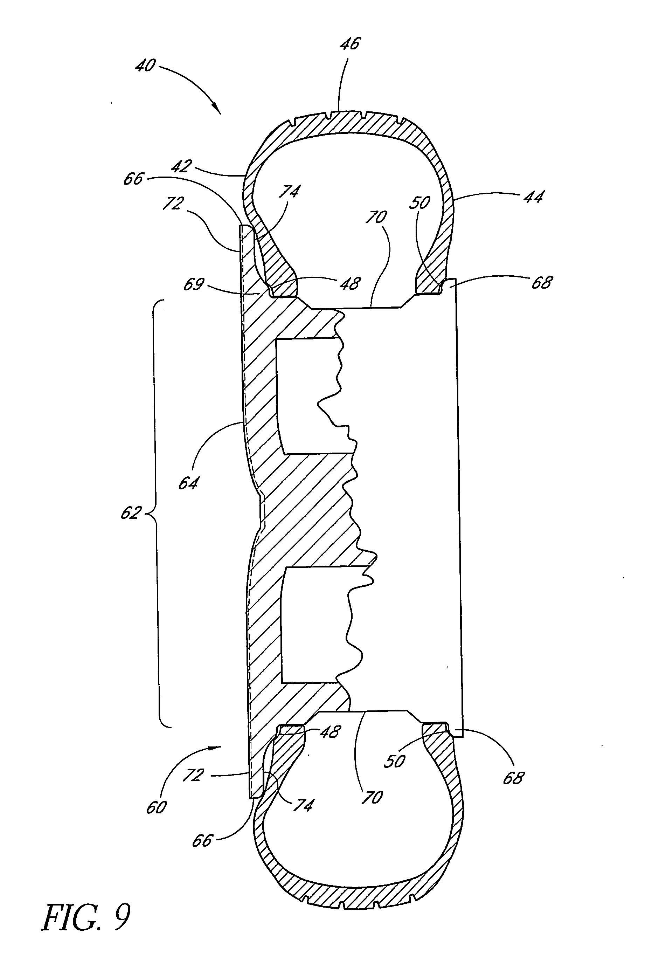

Figures 8A, 8B and 9 illustrate background to the present invention. The front view of the additional embodiments of **FIGURES 7A** and **7C** are shown in **FIGURE 8A,** and the front view of the additional embodiment of **FIGURE 7B** is shown in **FIGURE 8B.** If means are used to cover the bolts and/or screws (or equivalent connectors), then these embodiments would look even more like the embodiment shown in **FIGURE 8.**

Referring to **FIGURE 9,** the interface between the inboard lip **68** and the inboard tire wall **44** is similar to that of standard wheels and tires of the prior art.

The inboard bead **50** is shaped to correspond to the size and shape of the inboard lip **68.**

The inboard tire wall **44** usually will not bend or contort to stretch around the inboard lip **68** under stationary loads and normal operating conditions.

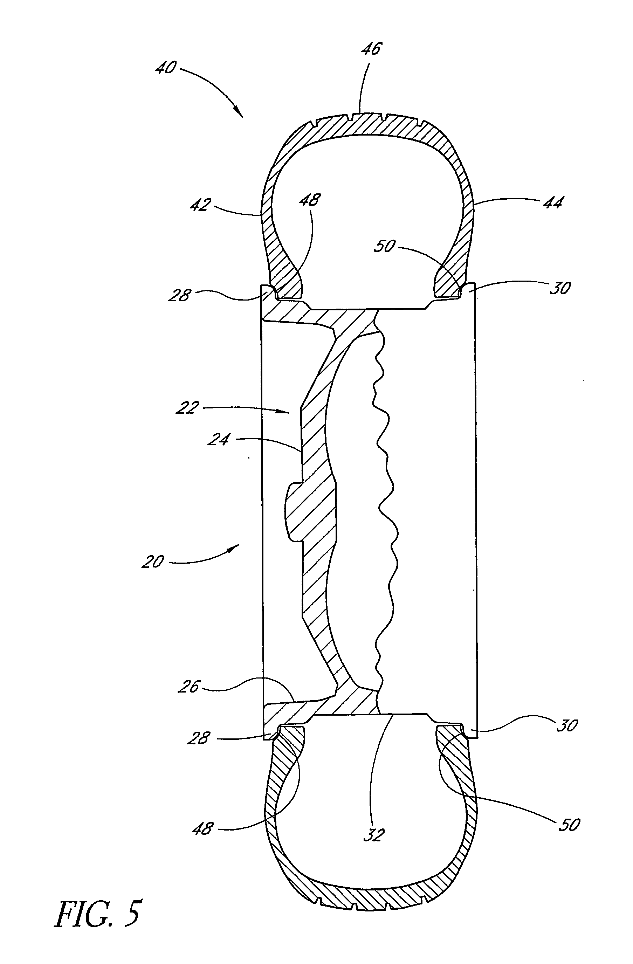

The outboard bead **48** of the tire **40** interfaces with the lower portion **69** of the outer flange **66.** The outboard tire wall **42** is pushed in the inboard direction by the outer flange **66,** causing the tire wall **42** to bend inwardly around the outer flange **66.** Thus, the tire **40,** when mounted on the wheel **60** with the outer flange **66,** has a somewhat concave radially inward outboard surface, whereas the tire **40,** when mounted on the wheel **20** with a typical outboard lip **28,** has a more convex radially inward outboard surface (see **FIGURE 5)** when pressurized under a standard vehicle load.

The use of a standard tire **40** on the wheel **60** is feasible, but has potential disadvantages. First, as previously explained, the inner radial portion of the outboard tire wall **42** must usually bend around the outer flange **66,** forming a concave radially inward outboard surface. The tire **40** is not specifically designed to be mounted on such a wheel **60** and may be subject to unintended contortion forces along the outboard tire wall **42,** particularly near the radially outward edge of the outer flange **66,** which could strain or cause excessive wear on the tire **40.** Second, the outboard tire wall **42** often has words on its face, including the brand/model of the tire and the tire specifications (such as the tire volume and recommended tire pressure). The outer flange **66** may, depending upon its size and the relative positioning of the words, cover all or a portion of these words on the outboard tire wall **42.** Third, the simulation of a larger-diameter wheel with a low-profile tire in a perspective view may be less effective when the wheel **60** does not appear to interface tightly with the tire **40** on which it is mounted.

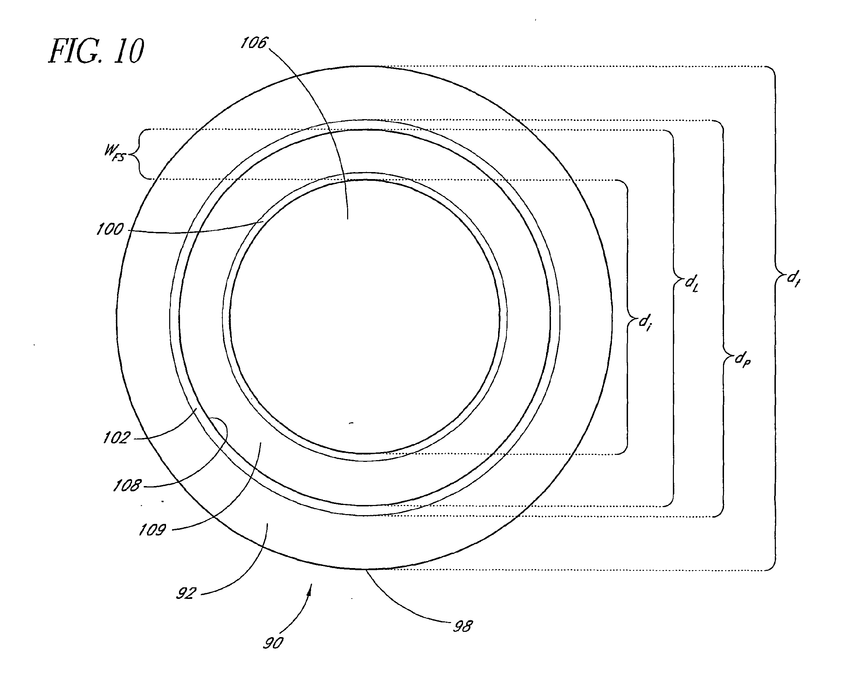

Referring to **FIGURES 10-11,** an embodiment of the tire **90** of the present invention includes an outboard tire wall **92,** an inboard tire wall **96,** and a tread **98.** The outboard tire wall **92** preferably includes an outboard bead **100,** a wheel protector **102,** and a ledge **108.** As used herein, the term "ledge" may include horizontal, curved, slanted, or sloping surfaces. The inboard tire wall **96** preferably includes an inboard bead **104.** The opening in the center of the tire 90 is the wheel void **106.** The tire beads **100, 104** are comprised essentially of indented rings formed on the inner radial edges of the respective inboard and outboard tire walls **92, 96.** The wheel **60** is mounted within the wheel void **106** of the tire **90.**

The wheel protector **102** on the outboard tire wall **92** extends in the outboard direction beyond the outboard wheel face **64.** Preferably, the wheel protector **102** extends at least about 1/16 inch (0.16cm), and more preferably between about 1/16 inch (0.16cm) and about 1/4 inch (0.64cm) beyond the wheel face 64. When the vehicle on which the tire **90** is mounted comes in contact with a large stationary object (such as a curb), the flexible wheel protector **102** on the outboard tire wall **92** touches the object instead of the wheel face **64.** The wheel face **64** is thereby protected from scratching and bending. The width of the ledge **108** is preferably at least about 1/8 inch (0.32cm) and more preferably between about 1/8 inch (0.32cm) and about 1/4 inch (0.64cm).

Those of skill in the art will appreciate after reading this disclosure that many other widths for the ledge and wheel protector within and beyond these ranges are possible and are encompassed by the present invention.

In the illustrated embodiment, the radial location of the ledge **108** (i.e., the distance between the inner diameter $d_i$ of the tire and the diameter $d_L$ of the ledge **108**) is about the same as or displaced a slight distance in the outwardly radial direction from the outer diameter of the 2-1/2-inch-wide (6.4cm) outer flange **66** of the wheel **60.**

As previously explained, those of skill in the art will appreciate after reading this disclosure that the outer flange **66** may have many other widths, including 1 inch (2.5cm), 1-1/2 inches (3.8cm), 2 inches (5.1cm), 2-1/2 inches (6.4cm), 3 inches (7.6cm), 3-1/2 inches (8.9cm), or 4 inches (10cm). Thus, the diameter $d_L$ would also have corresponding sizes of about inch (2.5cm), 1-1/2 inches (3.8cm), 2 inches (5.1cm), 2-1/2 inches (6.4cm), 3 inches (7.6cm), corresponding sizes of about 1 inch (2.5cm), 1-1/2 inches (3.8cm), 2 inches (5.1cm), 2-1/2 inches (6.4cm), 3 inches (7.6cm), 3-1/2 inches (8.9cm), or 4 inches (10cm) to approximately match the size of the outer flange **66.** The outer diameter $d_p$ of the wheel protector **102** is somewhat larger than the diameter $d_L$ of the ledge **108.** The region between the inner diameter $d_i$ of the tire wall **92** and the diameter of $d_L$ of the ledge **108** is the flange seat **109.** The width $W_{fs}$ of the flange seat **109** is preferably at least about one-quarter of the width of the outboard tire wall **92** (as measured along the tire wall **92** from the inner diameter $d_l$ to the outer tire diameter $d_t$ where the tread **98** begins).

More preferably, the width $W_{fs}$ of the flange seat **108** is at least about one-third, and most preferably at least about one-half, of the width of the outboard tire wall **92.** Many other sizes within and beyond these ranges and examples are encompassed by the present invention.

If the flange seat **109** and outer flange **66** do not extend radially far enough, the desired simulation is less effective. If they extend too far, the vehicle on which the wheel is mounted would undesirably appear to be riding on its wheels with little or no tire visible.

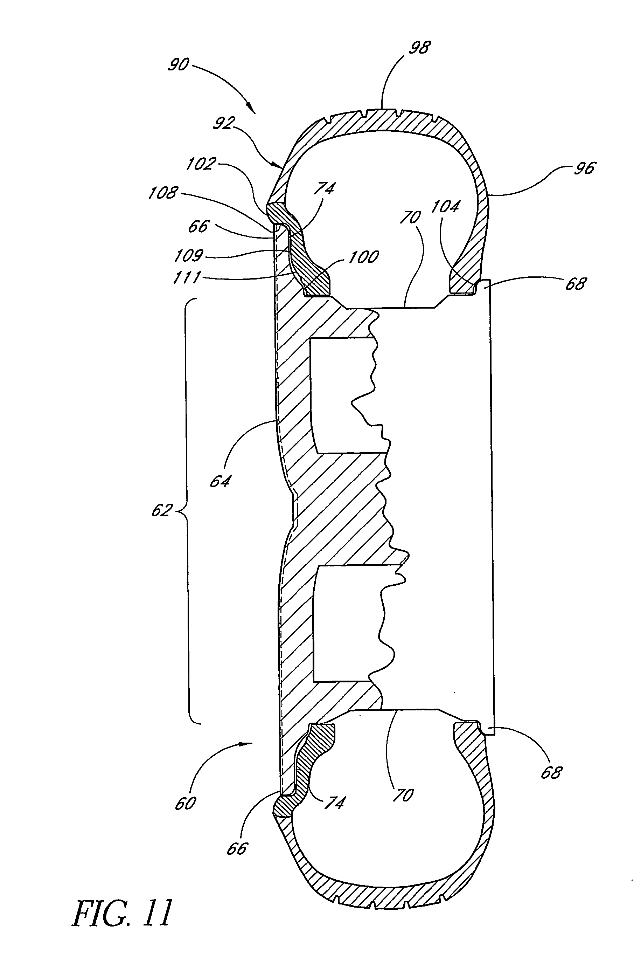

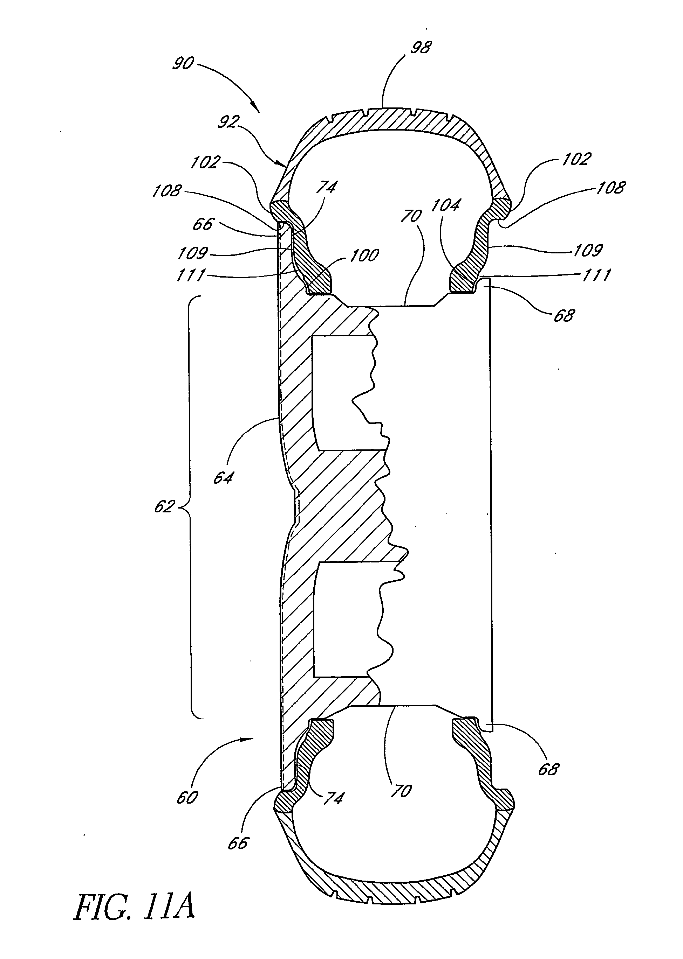

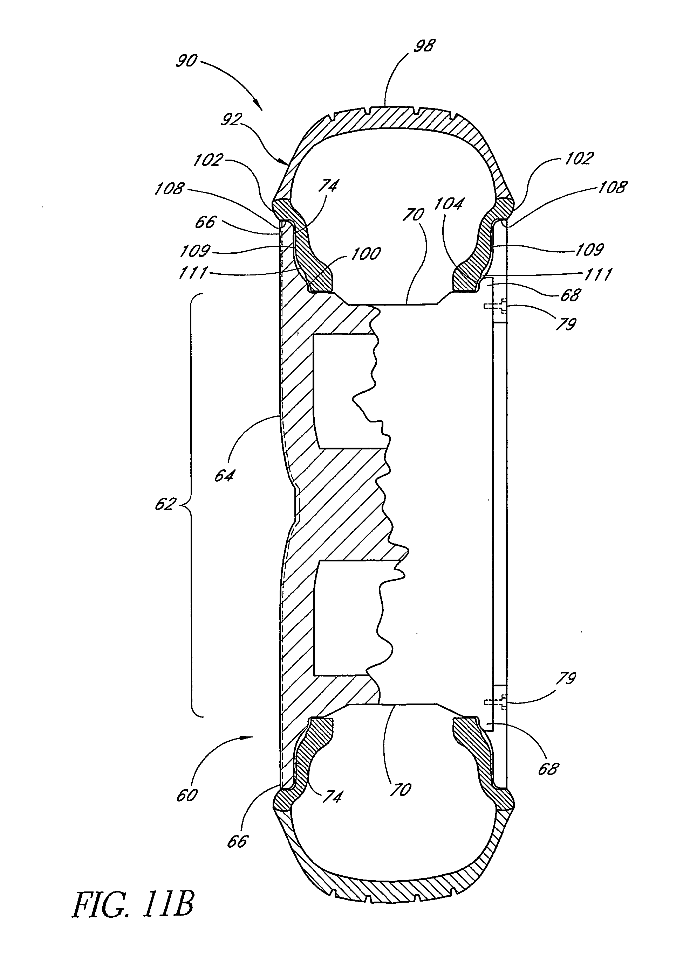

In the embodiment of **FIGURE 11,** the inboard bead **104** is intended to correspond to the height of the inboard lip **68,** and is similar in shape and size to the inboard bead **50** of a typical tire of the prior art (see **FIGURE 5**). Any words written on the outboard tire wall **92** are preferably positioned above the flange seat **109** so that such words are fully visible after the wheel **60** has been mounted within the tire **90** and the outer flange **66** covers up substantially all of the flange seat **109.**

In the embodiment of **FIGURE 11A** the tire **90** includes flange seats **109** on the inboard and outboard sides. The tire **90** is therefore more symmetric and balanced.

Advantageously, during manufacturing and installation of the tire **90** in **FIGURE 11A,** it is unnecessary to be concerned with the inboard or outboard orientation of the tire **90.**

In the embodiment of **FIGURE 11B,** the tire of **FIGURE 11A** has been mounted on the wheel of **FIGURE 7D** with a detachable inboard flange.

The flange seat **109** is preferably contoured to generally match the interior faces of the flanges **66, 77.** The flange seat **109** is also preferably constructed to be substantially more rigid than the remainder of the outboard tire wall **92,** the tread **98,** and/or the inboard tire wall **96.** The rigidity of the flange seat **109** (on the outboard and/or inboard tire walls) is intended to deflect or transfer at least a portion of the flexing of the tire radially outwardly to the peripheral areas of the tire. In this way, the radially inward portion of the tire, which may be near or even touching the flanges **66, 77** of the wheel **60,** will be less likely to press forcefully against the flanges **66, 77** possibly causing them to bend or to produce undue wear on the tire walls. The shielding of the flange **66, 77** by the rigidity of the flange seat **109** is especially advantageous in extreme driving conditions, such as in tight turns, under heavy loads, or when a tire passes into a depression in the road at high speeds.

Those of skill in the art will appreciate after reading this disclosure that the rigidity of the flange seat **109** may be increased by any number of methods known in the art such as, for example, including or modifying the characteristics of imbedded radial belts, heating and/or compressing the rubber material, or otherwise changing the density or composition of the rubber material of the tire wall in this region.

The flange seat **109** allows the outer flange **66** to be seated within the tire wall **92** in a manner that more closely simulates a large-diameter wheel mounted within a low profile tire. Even in a perspective view, it would be difficult for a casual observer to detect that the barrel **70** of the wheel **60** is not commensurate in size with the outer diameter of the outboard face **64** of the wheel **60,** and that the tire **90** is actually much wider than it appears from the inner radial edge of the tire wall **92** to the tread **98.**

In the illustrated embodiment, there is a relatively small gap **111** between the flange seat **109** and the outer flange **66.** The gap **111** permits the flange seat **109** to flex and bend a small amount under normal driving conditions. If there were a substantial gap between the outer flange **66** and the outboard tire wall **42,** the effectiveness of the simulation of a large-diameter wheel would be greatly diminished because the outer flange **66** may appear to be separated from the rest of the wheel, and the underlying tire wall **42** may be visible behind the outer flange **66.** The flange seat **109** could also be constructed such that there is no gap between the flange seat **109** and the outer flange to achieve a tighter fit.

The lengths of each of the outboard and inboard tire walls **92, 96** are each preferably in the range of about 3 1/2 inches (8.9cm) to 5 1/2 inches (14cm). Moreover, the distance between the tread 98 and the inner diameter of the outboard tire wall **92** is preferably about the same as the distance between the tread 98 and the inner diameter of the inboard tire wall **96.** If either of the tire walls **92, 96** were substantially longer than the other, the tire might be subject to unbalanced stresses or wear, and perhaps require a specialized fitting for the wheel on which the tire is mounted. The lengths of the inboard and outboard tire walls **92, 96** could be different, especially if the tire **90** were designed to be mounted on a modified wheel wherein the inboard and outboard diameters of the barrel **70** were not the same.

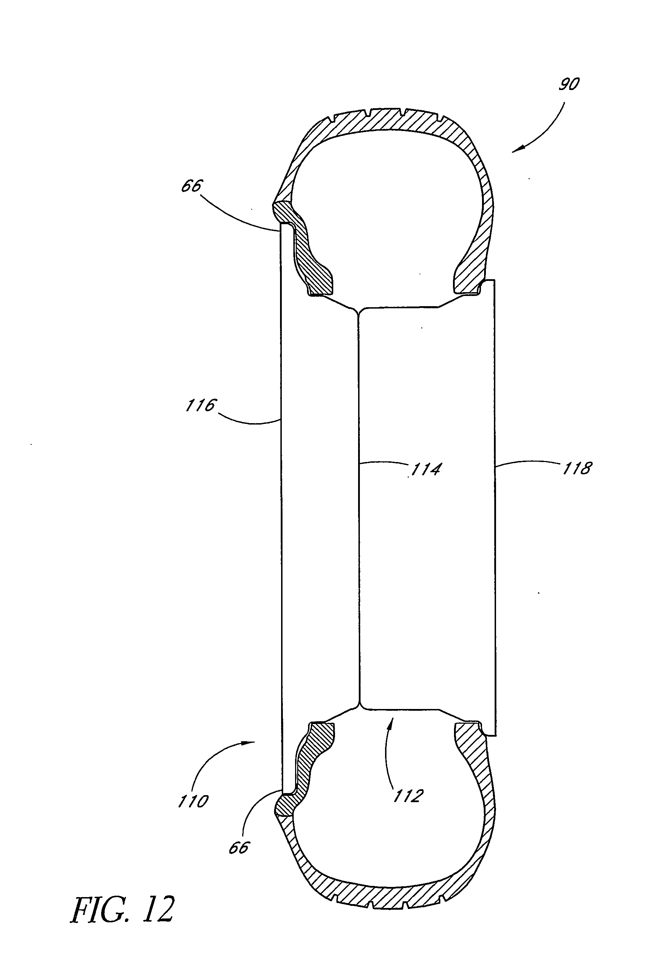

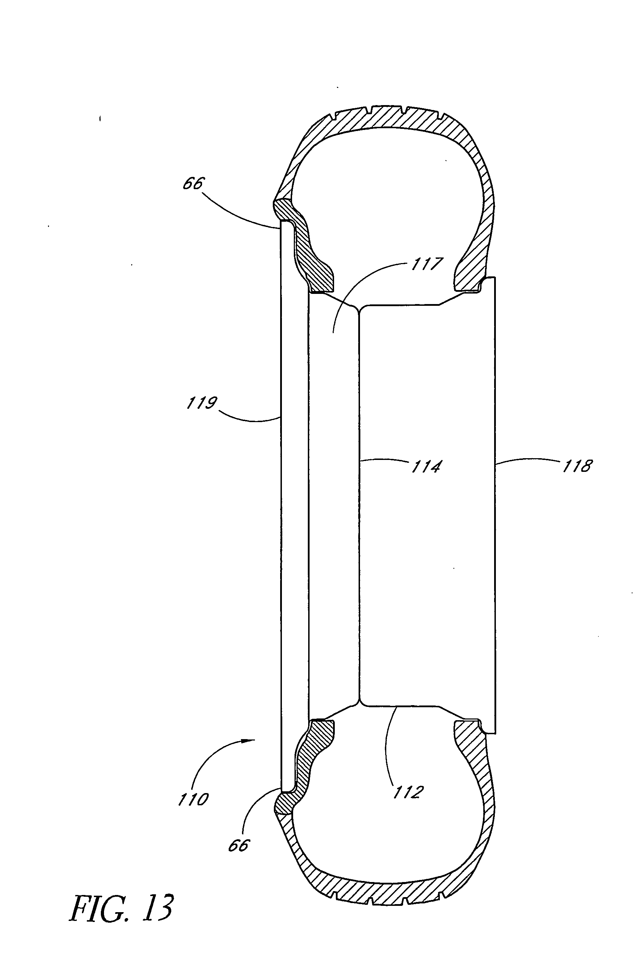

**FIGURE 12** is a side view of another embodiment of a wheel **110** of the present invention with the tire 90 of **FIGURE** 10 mounted thereon. The wheel **110** is similar to the wheel **60** of **FIGURES 6, 7, 9,** and **11,** but the barrel **112** is divided into an outboard portion **116** and an inboard portion **118** along a vertical interface **114.** In the wheel industry, a wheel with such a divided barrel is commonly referred to as a "two-piece" wheel. As shown in **FIGURE 13,** the outboard portion may be further divided into an outboard face **119** and a middle portion **117.** The wheel **110** is referred to in the wheel industry as a "three-piece" wheel. The various portions **116, 119, 117** of the wheel **110** may be detached from the inboard portion **118** of the wheel **110** by removing securing bolts (not shown). The embodiments of **FIGURES 12** and **13** could also be used with the flanges, wheel face, and/or tires of **FIGURES 7A-D, 8A-8B,** and **11A-B.**

In general, two- and three-piece wheels are more costly than one-piece wheels and are targeted at consumers who drive more expensive vehicles. Many high-end vehicles come stock from the factory with two- and three-piece wheels. The inboard portion **118** of such wheels usually has a specialized size and shape to fit a particular type of vehicle axle or to accommodate specially designed components in the braking, steering, or suspension systems. It would not be cost-effective for most after-market wheel manufacturers to make different types of one-piece wheels for each of the different types of vehicles that require specialized wheel parts. Instead, the vehicles come with two- or three-piece wheels having a specialized inboard portion **118,** but an interchangeable front face **116** and/or middle portion **117.** In this way, the consumer can obtain an after-market wheel with a stylish appearance, but the wheel manufacturer does not need to undertake the expense of building and marketing different one-piece wheels for the many different varieties of specialized wheel sizes.

The individual costs of manufacturing two- and three-piece wheels may be higher, but the overall volume of such wheel sales in the industry is much lower than the sales volume for one-piece wheels. For this reason, one-piece wheels are generally made with expensive, high-volume casting equipment, whereas two- and three-piece wheels are machined from blocks of alloy metal. It is generally less expensive to re-tool the machining process to manufacture a larger wheel or a specialty wheel than it would be to re-tool the high-volume casting equipment. Thus, it is contemplated that the present invention may be especially suited for the production of machined two- and three-piece wheels sizes that may not yet even be available in one-piece molded sizes.

It is also contemplated that the various embodiments of the present invention may be especially suited for use with small vehicles and/or stock wheels for vehicles. Vehicle manufacturers are constantly searching for products that enhance the performance and/or aesthetics of their vehicles without adding significantly to the overall cost. This principle is particularly important in connection with less expensive cars. The present invention encompasses a wide range of enhanced wheel sizes that provide the appearance of an expensive upgrade for a relatively small amount of additional cost.

While the foregoing description sets forth various examples and details relating to preferred embodiments, it should be appreciated that the description is illustrative only and should not to be construed as limiting the invention. Thus, the scope of this disclosure is not to be limited by the illustrations or the foregoing descriptions thereof, but rather solely by the appended claims.

**Claims**

**1.** A wheel and tire adapted to be attached to a vehicle :

  (a) the wheel (60) comprising:

    (i) a central hub (62) adapted to be attached to a vehicle, and the central hub (62) having an inboard side, an outboard side (64), and a central axis;
    (ii) an inboard lip (68) formed on the inboard side of the hub (62) and extending radially outwardly;
    (iii) a metal outer flange (66) attached to the outboard side of the hub (62) and extending radially outwardly, the outer flange (66) having an inner diameter and an outer diameter, the outer diameter being greater than an outer diameter of the inboard lip (68), so as to give an appearance of a larger-diameter wheel than would otherwise exist if the outer flange (66) had the same diameter as the inboard lip (68), and the outer flange (66) having an inboard side, an outboard side; an upper portion, and a lower portion, the inboard side of the lower portion of the outer flange (66) having a substantially convex surface ; and

(iv) a design pattern on the central hub (62) comprising a plurality of at least one of either protrusions (78), indentations (76), or slits (80) formed on the outboard side (64) of the central hub (62) and extending across at least a portion of the outer flange (66) of the wheel (60), the distance between the central axis of the hub to the furthest radial extent of the design pattern being greater than the distance between the central axis of the hub (62) and the outer diameter of the inboard lip (68),; to enhance said appearance of a larger-diameter wheel.; and

(b) the tire (90) comprising:

(i) an inboard tire wall (96) having an inboard bead; and
(ii) an outboard tire wall (92) having a flange seat (109), the flange seat having an inner diameter, an outboard bead (100), and a ledge (108);

wherein the tire (90) is mounted on the wheel (60) such that the inboard side of the outer flange (66) substantially overlaps, and is in close proximity with, the flange seat (109), the outer radial edge of the outer flange (66) is juxtaposed in substantially facing relationship with the tire ledge (108), the inboard lip (68) interfaces with the bead of the tire (90), the area of interface between the outer flange (66) of the wheel (60) and the flange seat (109) on the outboard tire wall (92) is substantially greater than the area of interface between the inboard lip (68) and the bead on the inboard tire wall (96), and at least a portion of the outboard tire wall (92) extends at least as far in the outboard direction as the outboard face of the outer flange (66), so as to give an appearance of a larger-diameter wheel mounted within a lower-profile tire.

2. The wheel and tire of Claim 1, wherein the outer diameter of the outer flange (66) is at least about 3/4 inch (1.9 cm) greater than the outer diameter of the inboard lip.

3. The wheel and tire of Claim 1, wherein the outer flange (66) is adapted to abut against the outboard tire wall (92) of the tire (90) with substantially no gap therebetween when mounted thereon after the tire (90) is pressurized.

4. The wheel and tire of Claim 1, wherein the central hub (62) comprises a plurality of spokes and the pattern on the outer flange (66) gives the appearance that the spokes extend across at least a portion of the outer flange (66).

5. The wheel and tire of Claim 1, wherein the difference between the inner and outer diameters of the outer flange (66) is at least about 2 inches (5.1 cm).

6. The wheel and tire of Claim 1, wherein the outer flange (66) is integrally formed on the outboard side of the hub (62).

7. The wheel and tire of Claim 1, wherein the outer flange (66) is removably attached to the outboard side of the hub (62).

8. The wheel and tire of Claim 1, wherein the outer flange (66) and flange seat (109) are adapted to form a gap therebetween when the tire (90) is mounted onto the wheel and after the tire (90) is pressurized.

9. The wheel and tire of Claim 1, wherein the inboard tire wall comprises a flange seat (109), the flange seat (109) having an inner diameter, the inboard bead (104), and the ledge (108), such that the tire (90) is substantially symmetrical.

10. The wheel and tire of Claim 1, further comprising an inboard flange attached to the inboard side of the hub and extending radially outwardly, the inboard flange having an inner diameter and an outer diameter, wherein the difference between the inner and outer diameters of the inboard flange is at least about 1 inch (2.5cm).

11. The wheel and tire of Claim 10, wherein the difference between the inner and outer diameters of the inboard flange is at least about 1-½ inches (3.8 cm).

12. The wheel and tire of Claim 10, wherein the difference between the inner and outer diameters of the inboard flange is approximately equal to the difference between the inner and outer diameters of the outer flange (66) on the outboard face.

13. The wheel and tire of Claim 10, wherein the inboard flange is removably attached to the inboard side of the hub (62).

## Patentansprüche

1. Rad und Reifen zur Anbringung an einem Fahrzeug,

   a) wobei das Rad (60) Folgendes umfasst:

   i) eine zentrale Nabe (62), die zur Anbringung an einem Fahrzeug ausgeführt ist und wobei die zentrale Nabe (62) eine innenliegende Seite, eine außenliegende Seite (64) und eine Mittelachse hat,

   ii) eine innenliegende Lippe (68), die auf der innenliegenden Seite der Nabe (62) ausgebildet ist und sich radial nach außen erstreckt,

   iii) einen Außenflansch aus Metall (66), der an der außenliegenden Seite der Nabe (62) angebracht ist und sich radial nach außen erstreckt, wobei der Außenflansch (66) einen Innendurchmesser und einen Außendurchmesser hat, wobei der Außendurchmesser größer als ein Außendurchmesser der innenliegenden Lippe (68) ist, um den Anschein eines Rads mit einem größeren Durchmesser zu geben als andernfalls vorhanden wäre, wenn der Außenflansch (66) den gleichen Durchmesser wie die innenliegende Lippe (68) hätte, und der Außenflansch (66) eine innenliegende Seite, eine außenliegende Seite, einen oberen Abschnitt und einen unteren Abschnitt hat, wobei die innenliegende Seite des unteren Abschnitts des Außenflansches 66 eine im Wesentlichen konvexe Oberfläche hat, und

   iv) ein Gestaltungsmuster auf der zentralen Nabe (62), umfassend eine Vielzahl von Vorsprüngen (78) und/oder Vertiefungen (76) und/oder Aussparungen (80), die auf der außenliegenden Seite (64) der zentralen Nabe (62) ausgebildet sind und über wenigstens einen Teil des Außenflansches (66) des Rads (60) verlaufen, wobei der Abstand zwischen der zentralen Achse der Nabe und dem äußersten radialen Ende des Gestaltungsmusters größer als der Abstand zwischen der zentralen Achse der Nabe (62) und dem Außendurchmesser der innenliegenden Lippe (68) ist, um den genannten Anschein eines Rads mit größerem Durchmesser zu verbessern, und

   b) wobei der Reifen (90) Folgendes umfasst:

   i) eine innenliegende Reifenwand (96) mit einem innenliegenden Wulst und

   ii) eine außenliegende Reifenwand (92) mit einem Flanschsitz (109), wobei der Flanschsitz einen Innendurchmesser, einen außenliegenden Wulst (100) und eine Stufe (108) hat;

   wobei der Reifen (90) so an dem Rad (60) montiert ist, dass die innenliegende Seite des Außenflansches (66) den Flanschsitz (109) im Wesentlichen überlappt und in enger Nähe zu ihm liegt, der äußere radiale Rand des Außenflansches (66) in im Wesentlichen gegenüberliegender Beziehung neben der Reifenstufe (108) angeordnet ist, die innenliegende Lippe (68) den Übergang zu dem Wulst des Reifens (90) bildet, die Übergangsfläche zwischen dem Außenflansch (66) des Rads (60) und dem Flanschsitz (109) an der außenliegenden Reifenwand (92) im Wesentlichen größer ist als die Übergangsfläche zwischen der innenliegenden Lippe (68) und dem Wulst an der innenliegenden Reifenwand (96) und wenigstens ein Teil der außenliegenden Reifenwand (92) sich wenigstens so weit in der außenliegenden Richtung erstreckt wie die außenliegende Stirnfläche des Außenflansches (66), um den Anschein eines Rads mit größerem Durchmesser, das in einem Niederquerschnittsreifen montiert ist, zu geben.

2. Rad und Reifen nach Anspruch 1, wobei der Außendurchmesser des Außenflansches (66) wenigstens etwa 3/4 Zoll (1,9 cm) größer ist als der Außendurchmesser der innenliegenden Lippe.

3. Rad und Reifen nach Anspruch 1, wobei der Außenflansch (66) zur Anlage an der außenliegenden Reifenwand (92) des Reifens (90) im Wesentlichen ohne Spalt dazwischen ausgeführt ist, wenn daran montiert, nachdem der Innendruck im Reifen (90) aufgebaut worden ist.

4. Rad und Reifen nach Anspruch 1, wobei die zentrale Nabe (62) eine Vielzahl von Speichen umfasst und das Muster auf dem Außenflansch (66) den Anschein gibt, dass sich die Speichen über wenigstens einen Teil des Außenflansches (66) erstrecken.

5. Rad und Reifen nach Anspruch 1, wobei die Differenz zwischen dem Innen- und dem Außendurchmesser des Außenflansches (66) wenigstens etwa 2 Zoll (5,1 cm) beträgt.

6. Rad und Reifen nach Anspruch 1, wobei der Außenflansch (66) an die außenliegenden Seite der Nabe (62) angeformt ist.

7. Rad und Reifen nach Anspruch 1, wobei der Außenflansch (66) abnehmbar an der außenliegenden Seite der Nabe (62) angebracht ist.

**8.** Rad und Reifen nach Anspruch 1, wobei der Außenflansch (66) und der Flanschsitz (109) so ausgebildet sind, dass sie dazwischen einen Spalt bilden, wenn der Reifen (90) auf dem Rad montiert ist und nachdem der Innendruck im Reifen (90) aufgebaut worden ist.

**9.** Rad und Reifen nach Anspruch 1, wobei die innenliegende Reifenwand einen Flanschsitz (109) umfasst, wobei der Flanschsitz (109) einen Innendurchmesser, den innenliegenden Wulst (104) und die Stufe (108) hat, so dass der Reifen (90) im Wesentlichen symmetrisch ist.

**10.** Rad und Reifen nach Anspruch 1, ferner umfassend einen innenliegenden Flansch, der an der innenliegenden Seite der Nabe angebracht ist und radial nach außen verläuft, wobei der innenliegende Flansch einen Innendurchmesser und einen Außendurchmesser hat, wobei die Differenz zwischen dem Innen- und dem Außendurchmesser des innenliegenden Flansches wenigstens etwa 1 Zoll (2,5 cm) beträgt.

**11.** Rad und Reifen nach Anspruch 10, wobei die Differenz zwischen dem Innen- und dem Außendurchmesser des innenliegenden Flansches wenigstens etwa 1½ Zoll (3,8 cm) beträgt.

**12.** Rad und Reifen nach Anspruch 10, wobei die Differenz zwischen dem Innen- und dem Außendurchmesser des innenliegenden Flansches etwa gleich der Differenz zwischen dem Innen- und dem Außendurchmesser des Außenflansches (66) an der außenliegenden Stirnfläche ist.

**13.** Rad und Reifen nach Anspruch 10, wobei der innenliegende Flansch abnehmbar an der innenliegenden Seite der Nabe (62) angebracht ist.

**Revendications**

**1.** Roue et pneumatique adaptés pour être fixés à un véhicule,

(a) la roue (60) comprenant :

(i) un moyeu central (62) adapté pour être fixé à un véhicule, et le moyeu central '62) ayant un côté interne, un côté externe (64) et un axe central ;
(ii) une lèvre interne (68) formée sur le côté interne du moyeu (62) et s'étendant radialement vers l'extérieur ;
(iii) une bride externe métallique (66) fixée au côté externe du moyeu (62) et s'étendant radialement vers l'extérieur, la bride externe (66) ayant un diamètre intérieur et un diamètre extérieur, le diamètre extérieur étant supérieur à un diamètre extérieur de la lèvre interne (68), de façon à donner l'aspect d'une roue d'un diamètre supérieur à celui qu'elle aurait si la bride externe (66) avait le même diamètre que la lèvre interne (68), et la bride externe (66) ayant un côté interne, un côté externe, une partie supérieure, et une partie inférieure, le côté interne de la partie inférieure de la bride externe (66) ayant une surface essentiellement convexe ; et
(iv) un motif de dessin sur le moyeu central (62) comprenant une pluralité d'au moins l'une de saillies (78), d'empreintes (76) ou de fentes (80) formée sur le côté externe (64) du moyeu central (62) et s'étendant en travers d'au moins une partie de la bride externe (66) de la roue (60), la distance entre l'axe central du moyeu jusqu'à l'étendue radiale la plus éloignée du motif de dessin étant supérieure à la distance entre l'axe central du moyeu (62) et le diamètre externe de la lèvre interne (68), afin de rehausser ledit aspect d'une roue de plus grand diamètre ; et

(b) le pneumatique (90) comprenant :

(i) une paroi de pneumatique interne (96) ayant un talon interne ; et
(ii) une paroi de pneumatique externe (92) ayant un siège de bride (109), le siège de bride ayant un diamètre intérieur, un talon externe (100) et un rebord (108) ; le pneumatique (90) étant monté sur la roue (60) de telle sorte que le côté interne de la bride externe (66) chevauche essentiellement le siège de bride (109) et soit à proximité de celui-ci, le bord radial externe de la bride externe (66) étant juxtaposé en une relation essentiellement opposée avec le rebord de pneumatique (108), la lèvre interne (68) s'interfaçant avec le talon du pneumatique (90), la zone d'interface entre la bride externe (66) de la roue (60) et le siège de bride (109) sur la paroi de pneumatique externe (92) étant essentiellement supérieure à la zone d'interface entre la lèvre interne (68) et le talon sur la paroi de pneumatique interne (96), et au moins une partie de la paroi de pneumatique externe (92) s'étendant au moins aussi loin dans le sens externe que la face externe de la bride externe (66) de façon à donner l'aspect d'une roue de plus grand diamètre monté dans un pneumatique d'un profil plus mince.

**2.** Roue et pneumatique selon la revendication 1, le diamètre externe de la bride externe (66) dépassant d'au moins environ ¾ de pouce (1,9 cm) le diamètre extérieur de la lèvre interne.

**3.** Roue et pneumatique selon la revendication 1, la bride externe (66) étant adaptée pour buter contre la paroi de pneumatique externe (92) du pneumatique (90) essentiellement sans aucun espace entre elles lorsqu'elle est montée sur la paroi après la pressurisation du pneumatique (90).

**4.** Roue et pneumatique selon la revendication 1, le moyeu central (62) comprenant une pluralité de rayons et le motif sur la bride externe (66) donnant l'impression que les rayons s'étendent en travers au moins d'une partie de la bride externe (66).

**5.** Roue et pneumatique selon la revendication 1, la différence entre les diamètres intérieur et extérieur de la bride externe (66) est au moins d'environ 2 pouces (5,1 cm).

**6.** Roue et pneumatique selon la revendication 1, la bride externe (66) étant formée de façon intégrante sur le côté externe du moyeu (62).

**7.** Roue et pneumatique selon la revendication 1, la bride externe (66) étant fixée de façon amovible au côté externe du moyeu (62).

**8.** Roue et pneumatique selon la revendication 1, la bride externe (66) et le siège de bride (109) étant adaptés pour former un écart entre eux quand le pneumatique (90) est monté sur la roue et après la pressurisation du pneumatique (90).

**9.** Roue et pneumatique selon la revendication 1, la paroi de pneumatique interne comprenant un siège de bride (109), le siège de bride (109) ayant un diamètre intérieur, le talon interne (104) et le rebord (108), de telle sorte que le pneumatique (90) soit essentiellement symétrique.

**10.** Roue et pneumatique selon la revendication 1, comprenant en outre une bride interne fixée au côté interne du moyeu et s'étendant radialement vers l'extérieur, la bride interne ayant un diamètre intérieur et un diamètre extérieur, la différence entre les diamètres intérieur et extérieur de la bride interne étant au moins d'environ 1 pouce (2,5 cm).

**11.** Roue et pneumatique selon la revendication 10, la différence entre les diamètres intérieur et extérieur de la bride interne étant au moins d'environ 1-1/2 pouces (3,8 cm).

**12.** Roue et pneumatique selon la revendication 10, la différence entre les diamètres intérieur et extérieur de la bride interne étant approximativement égale à la différence entre les diamètres intérieur et extérieur de la bride externe (66) sur la face externe.

**13.** Roue et pneumatique selon la revendication 10, la bride interne étant fixée de façon amovible au côté interne du moyeu (62).

FIG. 1

FIG. 2

FIG. 3

*FIG. 4*

*FIG. 5*

FIG. 6

EP 1 551 647 B1

FIG. 7

20

FIG. 7A

*FIG. 7B*

FIG. 7C

FIG. 7D

FIG. 8

FIG. 8A

FIG. 8B

FIG. 9

FIG. 10

EP 1 551 647 B1

FIG. 11

*FIG. 11A*

FIG. 11B

FIG. 12

EP 1 551 647 B1

*FIG. 13*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 26604002 A
- US 20020079735 A1
- EP 0587053 A
- DE 10030314 A